# EUROPEAN PATENT APPLICATION

(11) **EP 2 853 556 A1**
(43) Date of publication of application: **01.04.2015**
(21) Application number: 14177482.8
(22) Date of filing: 17.07.2014
(51) Int. Cl.: C08J 11/08, C08L 77/02

(54) **Process and system for recovering polyamides and polymers from composite articles**

(30) Priority: 29.07.2013 IN MU24942013
(71) Applicant: GRP Limited (Formerly known as Gujarat Reclaim & Rubber Products Ltd.), L.B.S. Marg, Kurla West, Mumbai - 400070 (IN)
(72) Inventor: Ravetkar, Dilip Digambar, Pune 411007, Maharashtra (IN); Giramkar, Kushaba Dnyandev, Navi Mumbai 400708, Maharashtra (IN); Mhapralkar, Vaibhav Babaji, Thane (East) 400603, Maharashtra (IN)
(74) Representative: Chevalier, Renaud Philippe

(57) **Abstract**

A process and system for recovering at least one polyamide from one or more composite materials is provided. The process comprises dissolving the at least one polyamide present in the one or more composite materials in a solvent. The process further comprises separating at least one undissolved polymer from the solution by filtration. Furthermore, the process comprises evaporating part of the solvent from the solution containing the at least one polyamide. Also, the process comprises neutralizing, using an alkali, the solvent remaining with the at least one polyamide. In addition, the process comprises washing, filtering and drying the mixture comprising the at least one polyamide to obtain polyamide.

## Description

### Field of the invention

The present invention relates to a process and a system for recovering polyamides and polymers. In particular, the present invention relates to a process and system for recovering at least one of a polyamide and a polymer from one or more composite articles.

### Background of the invention

Polymers and polyamides are extensively used for making various products such as fabrics, carpets, films, moldings and automobile parts. The polyamides are polymers containing monomers of amides joined together by peptide bonds. Further, the polyamides have high strength and durability. Furthermore, the polyamides are either naturally occurring or made artificially. Artificially made polyamides include nylon 6, nylon 6,6 and aramids.

Conventionally, attempts have been made for separating the polyamides from waste materials. For example, dissolving composite articles containing polyamides in a solvent and subsequently separating the polyamides from a solution using anti-solvents. Some of the commonly used solvents are acids such as hydrochloric acid, formic acid, phosphoric acid and inorganic acids, alcohols such as methanol, phenolic compounds, cresols, fluorinated alcohols, solutions of alkaline earth halides, aromatic alcohols, glycolic compounds such as polyhydric alcohols, phenylmethyl alcohol, benzyl alcohol, triethylene glycol and tetraethylene glycol, lactum and lactones. However, it is difficult to efficiently recover polyamides using such solvents. In addition, some of these solvents are hazardous, which when used commercially may give rise to safety concerns. Moreover, the process of separation of the polyamides using solvents and anti-solvents involves consumption of large amounts of solvents and anti-solvents. Also, there are concerns regarding recovery of higher yields of pure polyamides.

Various other processes for separating polyamides from the solvents exist. For example, water and dilute formic acid are used to precipitate nylon from a mixture containing polyamides. The percentage of pure polyamide recovered is low thereby decreasing commercial feasibility. The abovementioned processes may not provide for recovery of polymers from composite articles. Further, the solvents used in the abovementioned processes are wasted.

Usually, waste materials containing polymers and polyamides are either burnt or used for landfills. Such methods for disposing the waste materials containing polymers and polyamides are hazardous for environment. Therefore, it is desirable to efficiently recover and recycle the polyamides and polymers from waste materials in an environment friendly manner.

In light of the abovementioned disadvantages, there is a need for a process and system for recovering at least one of a polyamide and a polymer from one or more composite articles. Further, there is a need for a process and system that provides high yields of pure polyamides. Furthermore, there is a need for a process and system that facilitates reusing of solvents used for recovering polyamides.

### Summary of the invention

A process for recovering at least one polyamide from one or more composite materials is provided. The process comprises dissolving the at least one polyamide present in the one or more composite materials in a solvent. The process further comprises separating at least one undissolved polymer from the solution by filtration. Furthermore, the process comprises evaporating part of the solvent from the solution containing the at least one polyamide. Also, the process comprises neutralizing, using an alkali, the solvent remaining with the at least one polyamide. In addition, the process comprises washing, filtering and drying the mixture of neutralization to obtain polyamide.

Another process for recovering at least one of a polyamide and a polymer from one or more composite materials is provided. The process comprises dissolving the at least one polyamide present in the one or more composite materials in a solvent. The process further comprises separating at least one undissolved polymer from the solution by filtration. Furthermore, the process comprises evaporating part of the solvent from the solution containing the at least one polyamide. In addition, the process comprises neutralizing separately, using an alkali, the solvent remaining with the at least one polyamide and with the separated at least one polymer. Also, the process comprise washing, filtering and drying separately the resultant mixtures of neutralization to obtain the at least one polyamide and the at least one polymer.

In an embodiment of the present invention, the one or more composite materials are in the form of small pieces, fibrous forms and lumps. In an embodiment of the present invention, the one or more composite materials contain at least one polyamide and at least one polymer. In an embodiment of the present invention, the at least one polyamide includes at least one of: nylon 6, nylon 6,6 and aramids. In an embodiment of the present invention, the at least one polyamide is dissolved in the solvent at a temperature of between about 60°C to about 150°C. In an embodiment of the present invention, the at least one polyamide is dissolved under pressure ranging from atmospheric to about 5 kg/cm2. In an embodiment of the present invention, the solvent used for dissolving the at least one polyamide is acetic acid. Further, the acetic acid is glacial acetic acid. In an embodiment of the present invention, evaporation of the solvent is carried out at a temperature of between about 60°C to about 150°C. In an embodiment of the present invention, evaporation of the solvent is carried out at a pressure ranging from atmospheric to about 5 kg/cm2. In an embodiment of the present invention, evaporation is carried out by applying absolute pressure from 40 to 1500 mm Hg. In an embodiment of the present invention, the solution is stirred during evaporation. In an embodiment of the present invention, the processes comprise condensing and collecting the evaporated solvent for reuse. Further, at least 90% of the solvent used for dissolving is condensed and collected for reuse. In an embodiment of the present invention, the alkali used for neutralizing of the solvent is caustic soda. Further, the caustic soda has a concentration of about 2% to 10% by volume. In an embodiment of the present invention, the at least one polymer includes at least one of rubber, polyurethane, silicone and neoprene. In an embodiment of the present invention, washing, filtering and drying comprises recovering sodium acetate upon neutralization.

A system for recovering at least one polyamide from one or more composite materials is provided. The system comprises a dissolution reactor for dissolving the at least one polyamide present in the one or more composite materials in a solvent. The system further comprises a filter unit for separating at least one undissolved polymer in the solution. The system further comprises a reactor for evaporating the solvent containing the at least one polyamide. Furthermore, the system comprises a polyamide neutralization reactor for neutralizing, using an alkali, the solvent remaining with the at least one polyamide. Also, the system comprises a polyamide filter and dryer for at least one of washing, filtering and drying of the mixture obtained after neutralization comprising the at least one polyamide to obtain polyamide.

In an embodiment of the present invention, the system further comprises a polymer neutralization reactor for neutralizing, using an alkali, the solvent remaining in the separated at least one polymer and a polymer filter and dryer for at least one of: washing, filtering and drying of the mixture obtained after neutralization and comprising the at least one polymer to obtain polymer. In an embodiment of the present invention, the system further comprises a condenser for condensing and collecting the evaporated solvent for reuse.

### Brief description of the accompanying drawings

The present invention is described by way of embodiments illustrated in the accompanying drawing wherein:

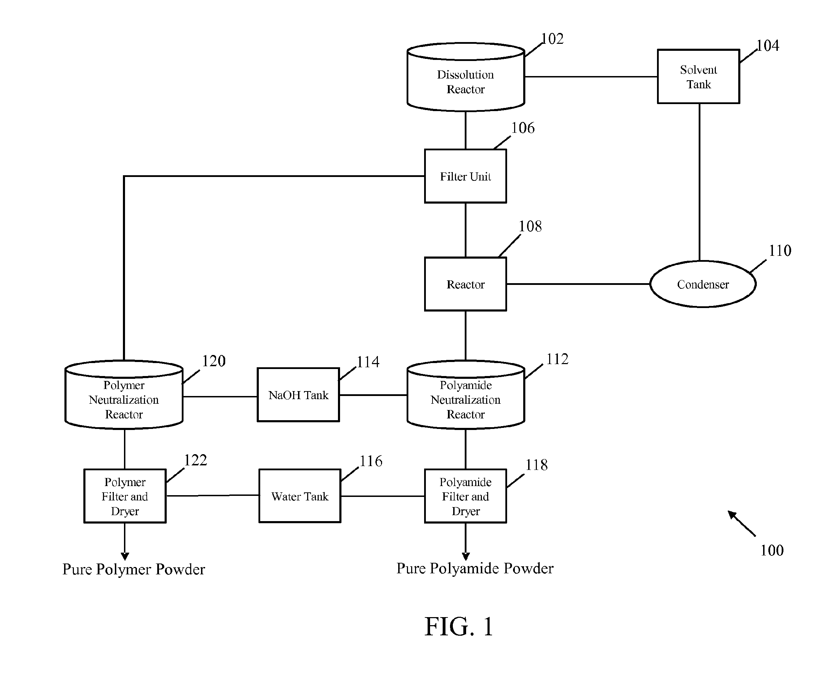

FIG. 1 is a block diagram illustrating a system for recovering at least one of a polyamide and a polymer from one or more composite articles, in accordance with an embodiment of the present invention.

### Detailed description of the invention

A process and system for recovering at least one of a polyamide and a polymer from one or more composite materials is provided. The invention provides for a process and system that provides high yields of pure polyamides. Furthermore, the invention provides for a process and system that facilitates in reusing the solvents used for recovering polyamides.

The following disclosure is provided in order to enable a person having ordinary skill in the art to practice the invention. Exemplary embodiments are provided only for illustrative purposes and various modifications will be readily apparent to persons skilled in the art. The general principles defined herein may be applied to other embodiments and applications without departing from the spirit and scope of the invention. The terminology and phraseology used is for the purpose of describing exemplary embodiments and should not be considered limiting. Thus, the present invention is to be accorded the widest scope encompassing numerous alternatives, modifications and equivalents consistent with the principles and features disclosed. For the purposes of clarity, details relating to technical material that is known in the technical fields related to the invention have not been described in detail so as not to unnecessarily obscure the present invention.

The invention provides for recovering at least one of a polyamide and a polymer from one or more composite articles. The one or more composite articles contain at least one polymer and at least one polyamide. The one or more composite articles include composite materials such as, but not limited to, rubber tires, airbags, fabrics, carpets, films, moldings and automobile parts. The at least one polyamide include at least one of nylon 6, nylon 6,6, and aramids. The at least one polymer include at least one of rubber, polyurethane, neoprene and silicone. The one or more composite articles are reduced to composite materials of specific forms and shapes by using one or more mechanical methods. The specific forms include, but not limited to, small pieces, fibrous forms and lumps.

In an embodiment of the present invention, the one or more composite materials include rubber tires. Strong bonds exist between polyamide fibers and polymer used in making the rubber tires. One or more mechanical methods are used to reduce tires into smaller pieces or lumps. Reducing the tires to the abovementioned forms facilitate loosening of bonds between the polyamide fibers and the polymers.

In an embodiment of the present invention, the one or more composite materials are dissolved in a solvent to form a solution. The solution contains at least one polyamide which is dissolved and at least one polymer which remains undissolved as a slurry in the solution. Various solvents were tried for dissolving the one or more composite materials. For example, aqueous acetic acid was used for dissolution. However, use of aqueous acetic acid does not readily permit for precipitation of nylon. Mono Ethylene Glycol (MEG) was also tried as a solvent to dissolve nylon. Use of MEG does not readily permit for separation of nylon even after using various anti-solvents. Various anti-solvents including acetone were also used to precipitate nylon in acetic acid. However, such methods were not commercially feasible on account of yield. The solvent for dissolving the one or more composite materials is glacial acetic acid. In an aspect of the present invention, solvents such as glacial acetic acid provides for ease of dissolution of polyamide as well as permits for its later separation. In accordance with the invention, the use of glacial acetic acid in combination with other limitations provide for the recovery of polyamides, polymers and recycling of each of the mentioned material. In addition, as would be disclosed, the invention provides for recovering of sodium acetate.

In an embodiment of the present invention, the solution is heated to dissolve the at least one polyamide in the solvent such as glacial acetic acid. In an embodiment of the present invention, the solution is heated between 60 °C to 150°C under pressure ranging from atmospheric to 5 kg/cm2. More preferably, the solution is heated between 85°C to 117°C. The time duration for dissolution may vary as the time required for dissolving the at least one polyamide depends on various parameters such as the size of the composite article, temperature and concentration. As exemplar, the duration for dissolution is between 15 to 600 minutes.

The at least one undissolved polymer in the solution is separated by filtration. In an embodiment of the present invention, filtration is performed under pressure based on the amount of undissolved polymer in the solution. Further, the at least one polymer separated by filtration is further processed for obtaining high yields of pure polymers as described in later sections of the specification. The dissolved polymer is separated through filtration to yield remaining solution containing at least one dissolved polyamide in glacial acetic acid.

The solvent, such as glacial acetic acid, from the remaining solution containing the at least one polyamide is evaporated. Evaporation is carried out at temperatures of from about 60°C to 150°C. Pressure may be provided ranging from atmospheric level to about 5 kg/cm2. In an embodiment of the present invention, the absolute pressure applied during evaporation is 40 to 1500 mm Hg for glacial acetic acid. More preferably, the range of absolute pressure applied is 60 to 200 mm Hg. In an embodiment of the present invention, the evaporation rate is controlled and maintained so that 20% to 60% of glacial acetic acid is evaporated per hour. Controlled evaporation of acetic acid facilitates in obtaining polyamide in its preferred form; powder. Absence of controlled evaporation rate leads to retention of large amounts of glacial acetic acid. In an embodiment of the present invention, during evaporation, the remaining solution containing the polyamide and the glacial acetic acid is continuously stirred.

During evaporation, vapors of the evaporated solvent are condensed and collected. Ideally, a major part of glacial acetic acid used during dissolution is recovered. Preferably, at least 90% of glacial acetic acid used during dissolution is recovered. The recovered glacial acetic acid is further reused for dissolving the one or more composite materials.

Traces of glacial acetic acid remain in the separated at least one polymer. Traces of glacial acetic acid also remain in the at least one polyamide after evaporation. Removing traces of glacial acetic acid from the at least one polyamide and at least one polymer is necessary as glacial acetic acid is corrosive in nature.

Traces of the solvent in the at least one polyamide are neutralized using an alkali. In an exemplary embodiment of the present invention, the alkali used to neutralize glacial acetic acid is caustic soda (NaOH) having concentration of about 2% to 10% by volume. Further, the mixture is continuously stirred. During neutralization, caustic soda reacts with glacial acetic acid to form sodium acetate thereby removing the acetic acid from the at least one polyamide. The polyamide is then washed, dried and filtered to remove sodium acetate and recover pure polyamide powder. The sodium acetate removed from the polyamide is also recovered.

Traces of the solvent in the polymer are also neutralized using an alkali. In an exemplary embodiment of the present invention, traces of glacial acetic acid in the at least one polymer are neutralized using an alkali such as, but not limited to, caustic soda, in this embodiment, to form sodium acetate. In an exemplary embodiment of the present invention, the recovered polymer includes, but is not limited to, devulcanized rubber. Reference to rubber hereinafter has only been made in an exemplary fashion. It will be apparent to a person skilled in the art that the processes and systems described herein can be applied to composite materials comprising polymers such as, but not limited to, polyurethane, neoprene and silicone.

In an exemplary embodiment of the present invention, the glacial acetic acid present in the separated rubber is neutralized by adding caustic soda preferably having a concentration of about 2% to 10% by volume. The mixture is stirred and the caustic soda reacts with the glacial acetic acid in the polymer to form sodium acetate. The at least one polymer is then washed, filtered and dried to remove the sodium acetate and recover pure polymer powder. The sodium acetate removed from the polymer may be recovered.

FIG. 1 is a block diagram illustrating a system for recovering at least one polyamide and at least one polymer from one or more composite materials, in accordance with an embodiment of the present invention. In an embodiment of the present invention, the system 100 comprises a dissolution reactor 102, a solvent tank 104, a filter unit 106, a reactor 108, a condenser 110, a polyamide neutralization reactor 112, an NaOH tank 114, a water tank 116, a polyamide filter and dryer 118, a polymer neutralization reactor 120 and a polymer filter and dryer 122.

The polyamides in the one or more composite materials are dissolved in a solvent in the dissolution reactor 102. In an embodiment of the present invention, the one or more composite materials include, but not limited to, rubber tires, fabrics, carpets, films, moldings and automobile parts. Further, the composite materials contain at least one polyamide and at least one polymer.

In an embodiment of the present invention, the at least one polyamide include at least one of nylon 6, nylon 6,6, and aramids. In an embodiment of the present invention, the at least one polymer includes, but is not limited to, rubber, polyurethane, neoprene and silicone. The one or more composite materials may be obtained in specific forms and shapes by using one or more mechanical methods. The specific forms and shapes include, but are not limited to, small pieces, fibrous forms and lumps. In an embodiment of the present invention, the one or more composite materials include tires which contain polyamide fibers and polymer such as rubber. Strong bonds exist between polyamide fibers and polymers used in making tires. One or more mechanical methods (known in the art) are therefore used to reduce tires into small pieces or lumps. Reducing the tires to abovementioned forms and shapes facilitates loosening of bonds between the polyamide fibers and the polymers.

Solvents provided for dissolving polyamides in the dissolution reactor 102 include, but are not limited to, acetic acid. More preferably, the solvent used is glacial acetic acid. The glacial acetic acid is stored in the solvent tank 104 and supplied to the dissolution reactor 102. Once glacial acetic acid is mixed with the one or more composite materials, the mixture is heated. In an embodiment of the present invention, the mixture is heated preferably to between about 60°C to about 150°C under pressure ranging from atmospheric level to about 5 kg/cm2. More preferably, the mixture is heated to between about 85°C to about 117°C. The time duration of dissolution may vary as the time required for dissolving the at least one polyamide depends on various parameters such as, the size of the composite article, temperature and concentration. The mixture is heated until the at least one polyamide present in the one or more composite materials is dissolved with the polymer remaining undissolved as a slurry.

The undissolved polymer is separated from the solution in the filter unit 106. In an exemplary embodiment of the present invention, the undissolved polymer is separated from the solution of the at least one polyamide in the glacial acetic acid in the filter unit 106. Filtration methods as any available in art may be employed for filtration.

The separated solution obtained upon filtration is fed to the reactor 108 for evaporation of the solvent. In an exemplary embodiment of the present invention, the solution containing the at least one dissolved polyamide in glacial acetic acid is concentrated by evaporating the glacial acetic acid at a controlled rate in the reactor 108. During evaporation, the mixture of the polyamide and glacial acetic acid is continuously stirred. In an embodiment of the present invention, stirring is performed in a manner such that both the upper and the bottom portion of the solution are vigorously stirred in the reactor 108. In an embodiment of the present invention, as the solvent evaporates and concentration of polyamide increases, the solution tends to become thicker and settle at the bottom of the reactor 108. In an embodiment of the present invention, during evaporation, the reactor 108 is provided with an agitator for more vigorous stirring at the bottom as the solution thickens.

The solvent vapors are channeled from the reactor 108 to the condenser 110 for condensing. In an exemplary embodiment of the present invention, the vapors of the evaporated glacial acetic acid are condensed and the glacial acetic acid is recovered. The recovered glacial acetic acid may be recycled to the solvent tank 104 for reuse in the dissolution process carried out in the dissolution reactor 102.

The concentrated polyamide in solvent obtained through evaporation is fed to the polyamide neutralization reactor 112 for neutralizing the remaining solvent. In an exemplary embodiment of the present invention, the polyamide recovered after evaporation contains traces of glacial acetic acid. The traces of glacial acetic acid are neutralized in the Polyamide Neutralization Reactor 112 using an alkali such as, but not limited to, caustic soda (NaOH). The caustic soda is supplied by the NaOH tank 114. The mixture is stirred. The caustic soda reacts with the glacial acetic acid to form sodium acetate. The polyamide filter and dryer 118 is then used for washing, filtering and drying of the mixture comprising polyamide to remove the sodium acetate and to obtain pure polyamide powder. The water tank 116 supplies water to the polyamide filter and dryer 118 to remove the sodium acetate from the polyamide. The sodium acetate removed from the polyamide may be recovered. In an embodiment of the present invention, the polyamide filter and dryer 118 may comprise a separate washer and filter (not shown) and a separate polyamide dryer (not shown).

Traces of the solvent are also present in the at least one polymer separated by the filter unit 106. In an embodiment of the present invention, traces of glacial acetic acid present in the polymer are neutralized in the polymer neutralization reactor 120. In an exemplary embodiment of the present invention, traces of the glacial acetic acid in the rubber, polyurethane and other polymers are removed by neutralizing with an alkali such as caustic soda supplied from the NaOH tank 114 to form sodium acetate. The polymer filter and dryer 122 further washes, filters and dries the rubber powder to remove sodium acetate and obtain pure rubber powder. The sodium acetate removed from the rubber is also recovered. In an embodiment of the present invention, the polymer filter and dryer 122 may comprise a separate washer and filter (not shown) and a separate polymer dryer (not shown).

The invention will now be described by reference to the following examples in detail. The examples are merely illustrative and not intended to limit the scope of the invention. In the following examples, pure polyamides such as Nylon 6 and Nylon 6, 6 are recovered. However, it will be understood by those skilled in the art that the disclosed embodiments may be applied for recovering other polyamides. References to Nylon 6 & Nylon 6, 6 have only been made to simplify the description of the process and system of the present invention.

### Example # 1: Recovering rubber and Nylon 6 from tire fibre using Glacial Acetic Acid

100 grams of tire fiber is taken in a 2 liter round bottom glass flask. The tire fiber contains Nylon 6 in the range of 40% to 80% and rest is rubber. Further, 700 to 1300 grams of glacial acetic acid is added to the flask as a solvent. The mixture thus formed is heated at a temperature range of 90°C to 110°C for 30 to 45 minutes. In order to avoid loss of acetic acid in the process, the round bottom flask is fitted with a glass condenser in which cooling water is circulated constantly to minimize loss of acetic acid. After heating the mixture, Nylon 6 is completely dissolved in glacial acetic acid and the rubber remains un-dissolved as slurry. The solution of Nylon 6 and glacial acetic acid is filtered out from the slurry by applying vacuum in the range of 560 to 700 mm Hg.

The solution obtained after separating rubber is then concentrated by evaporating glacial acetic acid in round bottom flask at a temperature range of 85°C to 120°C and vacuum range of 560 to 700 mm Hg. During evaporation, the solution is continuously stirred. The evaporated solvent is then condensed and reused in the dissolution process. After evaporation of glacial acetic acid, Nylon 6 powder containing traces of glacial acetic acid is left in the flask, which is neutralized using Caustic Soda solution (concentration 2 to 10% v/v) in another round bottom flask. Nylon 6 powder recovered after neutralization of glacial acetic acid is washed thoroughly with water and finally dried to obtain pure Nylon 6 powder. The recovered Nylon 6 powder product has a melting point of 216°C. Further, at least 95% of Nylon 6 initially present in the tire fiber is recovered. The rubber containing traces of glacial acetic acid is also neutralized using Caustic Soda solution (concentration 2 to 10% v/v) in another round bottom flask. The remaining rubber powder is also washed thoroughly with water and finally dried to obtain pure rubber powder. Further, at least 95% of rubber initially present in the tire fiber is recovered.

### Example # 2: Recovering Nylon 6 and rubber from tire fibres using Glacial Acetic Acid

6 kilograms of tire fiber containing Nylon 6 is taken in a 150 liter reactor. The tire fiber contains 40% to 80% Nylon 6 and rest is rubber. Further, 40 to 80 kilograms of glacial acetic acid is added to the reactor as a solvent. The mixture formed is heated at a temperature range of 90°C to 110°C for 30 to 45 minutes. The reactor is fitted with a glass condenser in which cooling water is circulated constantly to avoid loss of acetic acid. After heating the mixture, Nylon 6 is completely dissolved in the glacial acetic acid and the rubber remains un-dissolved in the form of slurry. Nylon 6 and glacial acetic acid are filtered out from the slurry under pressure in the range of 2 to 4 kg/cm2.

The solution obtained after separating rubber is then concentrated by evaporating glacial acetic acid in the reactor at a temperature range of 85°C to 120°C and vacuum range of 560 to 700 mm Hg. During evaporation, the solution is continuously stirred. The evaporated solvent is then condensed and reused in the dissolution process. After evaporation of glacial acetic acid, Nylon 6 powder is recovered. The recovered Nylon 6 powder contains traces of glacial acetic acid. The traces of glacial acetic acid are neutralized using Caustic Soda solution having concentration 2 to 10% v/v in another reactor. Nylon 6 powder, recovered after neutralization of glacial acetic acid, is then washed with water and dried to obtain pure Nylon 6 powder. Further, at least 95% of Nylon 6 initially present in the tire fiber is recovered. The recovered Nylon 6 powder product has a melting point of 216°C.

The rubber containing traces of glacial acetic acid is also neutralized using Caustic Soda solution (concentration 2 to 10% v/v) in another reactor. The recovered rubber powder is also washed with water and dried to obtain pure rubber powder. Further, at least 95% of rubber initially present in the tire fiber is recovered.

Example # 3: Recovering Nylon 6,6 and rubber from tires using Glacial Acetic Acid

6 kilograms of tire fibers containing Nylon 6,6 is taken in a 150 liter reactor. Further, the tire fiber contains 40% to 80% Nylon 6,6 and rest is rubber. 40 to 80 kilograms of glacial acetic acid is then added to the reactor as a solvent. The mixture formed is heated at a temperature range of 90°C to 110°C for 30 to 45 minutes. In order to avoid loss of acetic acid in the process, the reactor is fitted with a glass condenser in which cooling water is circulated constantly. This minimizes acetic acid losses in the process. During the process, Nylon 6,6 completely dissolves in glacial acetic acid and rubber remains un-dissolved in the form of slurry. The solution containing Nylon 6,6 and glacial acetic acid is then filtered out from the slurry under pressure in the range of 2 to 4 kg/cm2 to separate rubber from the Nylon 6,6 solution.

The solution thus obtained after separating rubber is then concentrated by evaporating glacial acetic acid in the reactor at a temperature range of 85°C to 120°C and vacuum range of 560 to 700 mm Hg. Also, the solution is continuously stirred. The evaporated solvent is then condensed and reused in the dissolution process. After evaporation of glacial acetic acid, the recovered Nylon 6,6 powder contains traces of glacial acetic acid. Further, traces of glacial acetic acid are neutralized using Caustic Soda solution (concentration 2-10% v/v) in another reactor. The recovered Nylon 6,6 powder is then washed with water and dried to obtain pure Nylon 6,6 powder. The recovered Nylon 6,6 powder product has a melting point of 260°C. In addition, the rubber containing traces of glacial acetic acid is neutralized using Caustic Soda solution (2 to 10% v/v) in another round bottom flask. The recovered rubber powder is also washed with water and dried to obtain pure rubber powder.

While the exemplary embodiments of the present invention are described and illustrated herein, it will be appreciated that they are merely illustrative. It will be understood by those skilled in the art that various modifications in form and detail may be made therein without departing from or offending the spirit and scope of the invention as defined by the appended claims.

## Claims

1. A process for recovering at least one polyamide from one or more composite materials, the process comprising:
dissolving the at least one polyamide present in the one or more composite materials in a solvent;
separating at least one undissolved polymer from the solution by filtration;
evaporating part of the solvent from the solution containing the at least one polyamide;
neutralizing, using an alkali, the solvent remaining with the at least one polyamide; and
washing, filtering and drying the mixture to obtain polyamide.

2. A process for recovering at least one of a polyamide and a polymer from one or more composite materials, the process comprising:
dissolving the at least one polyamide present in the one or more composite materials in a solvent;
separating at least one undissolved polymer from the solution by filtration;
evaporating part of the solvent from the solution containing the at least one polyamide;
neutralizing separately, using an alkali, the solvent remaining with the at least one polyamide and with the separated at least one polymer; and
washing, filtering and drying separately the mixtures comprising the at least one polyamide and the at least one polymer to obtain polyamide and polymer.

3. The process of claim 1 or claim 2, wherein the one or more composite materials are in the form of small pieces, fibrous forms and lumps.

4. The process of claim 1, wherein the one or more composite materials contain at least one polyamide and at least one polymer.

5. The process of claim 1 or claim 2, wherein the at least one polyamide includes at least one of: nylon 6, nylon 6,6 and aramids.

6. The process of claim 1 or claim 2, wherein the at least one polyamide is dissolved in the solvent at a temperature of between about 60°C to about 150°C

7. The process of claim 1 or claim 2, wherein the solvent used for dissolving the at least one polyamide is acetic acid.

8. The process of claim 7, wherein the acetic acid is glacial acetic acid.

9. The process of claim 1 or claim 2, wherein evaporation of the solvent is carried out at a temperature of between about 60°C to about 150°C.

10. The process of claim 1 or claim 2, wherein evaporation is carried out by applying absolute pressure from 40 mm Hg to 1500 mm Hg.

11. The process of claim 1 or claim 2, wherein the solution is stirred during evaporation.

12. The process of claim 1 or claim 2, wherein at least 90% of the solvent used for dissolving is condensed and collected for reuse.

13. The process of claim 1 or claim 2, wherein the alkali used for neutralizing of the solvent is caustic soda.

14. The process of claim 1 or claim 2, wherein the at least one polymer includes at least one of rubber, polyurethane, silicone and neoprene.

15. The process of claim 7 or claim 13, wherein washing, filtering and drying comprises recovering sodium acetate upon neutralization.

16. A system for recovering at least one polyamide from one or more composite materials, the system comprising:
a dissolution reactor for dissolving the at least one polyamide present in the one or more composite materials in a solvent;
a filter unit for separating at least one undissolved polymer from the solution;
a reactor for evaporating the solvent containing the at least one polyamide;
a polyamide neutralization reactor for neutralizing, using an alkali, the solvent remaining with the at least one polyamide; and
a polyamide filter and dryer for at least one of: washing,
filtering and drying of the mixture to obtain polyamide.

17. The system of claim 16 comprising:
a polymer neutralization reactor for neutralizing, using an alkali, the solvent remaining with the separated at least one polymer; and
a polymer filter and dryer for at least one of: washing,
filtering and drying of the mixture comprising at least one polymer to obtain polymer.

18. The system of claim 16, wherein the one or more composite materials contain at least one polyamide and at least one polymer.

19. The system of claim 16, wherein at least 90% of the solvent used for dissolution is condensed and collected for reuse.
